# FASCICULE DE BREVET EUROPEEN

(11) **EP 1 856 980 B1**
(45) Date de publication et mention de la délivrance du brevet: **03.02.2010**
(21) Numéro de dépôt: 07290592.0
(22) Date de dépôt: 10.05.2007
(51) Int. Cl.: A22C 29/02, A22C 17/00

(54) **Brochette de crevettes**
Garnellenspießchen
Shrimp skewer

(30) Priorité: 16.05.2006 FR 0604354
(43) Date de publication de la demande: 21.11.2007
(73) Titulaire: Unima Europe, 98000 Monaco (MC)
(72) Inventeur: Rakotonindriana, Francois Olivier, 401 Majunga (MG)
(74) Mandataire: Fruchard, Guy

(56) Documents cités:
- WO-A-01/00036
- WO-A-97/39950
- BE-A4- 1 009 589
- FR-A- 1 585 853
- US-A- 1 778 485
- US-A- 3 821 425

## Description

### ARRIERE PLAN DE L'INVENTION

On connaît des brochettes de crevettes comportant une pique sur laquelle sont montées des crevettes comprenant chacune une portion centrale décortiquée délimitée par une portion de tête non décortiquée et une portion de queue non décortiquée.

Dans les brochettes existantes, chaque crevette est montée en passant la pique longitudinalement à travers l'ensemble de la crevette, c'est-à-dire à travers la portion de tête, la portion centrale et la portion de queue. Pour consommer les crevettes après leur cuisson, il est donc nécessaire de retirer la pique en faisant coulisser les crevettes le long de la pique pour pouvoir sectionner la portion de tête et la portion de queue et consommer la partie centrale.

Cette manipulation est fastidieuse surtout lorsque les crevettes sont servies dans des restaurants spécialisés dans ce type de produit.

En outre, les crevettes s'étendent sur la pique sur toute leur longueur, de sorte qu'il n'est possible de mettre qu'un petit nombre de crevettes sur chaque pique.

Il est par ailleurs connu du document WO/97/39950 des brochettes de crevettes dans lesquelles les crevettes sont embrochées transversalement sur les piques.

### OBJET DE L'INVENTION

Un but de l'invention est de proposer des brochettes de crevettes présentant une structure facilitant la manipulation des crevettes.

### RESUME DE L'INVENTION

En vue de la réalisation de ce but, on propose selon l'invention une brochette de crevettes comportant une pique sur laquelle est montée au moins une crevette comprenant chacune une portion centrale décortiquée délimitée par une portion de tête non décortiquée et une portion de queue non décortiquée, dans laquelle la pique est montée à travers la partie de tête et la partie de queue de chaque crevette de façon que la portion centrale décortiquée s'étende sur le côté de la pique sans être traversée par celle-ci.

Ainsi, la partie centrale décortiquée peut être séparée après cuisson en sectionnant simplement la crevette à la limite de la portion de tête et de la portion de queue.

Selon une version avantageuse de l'invention, la portion de queue forme un angle avec la pique. Cette inclinaison de la portion de queue provoque une cambrure de la partie centrale et la crevette occupe donc une longueur réduite sur la pique.

Selon un mode de réalisation préféré de l'invention, les crevettes sont montées par paires en étant disposées tête-bêche. On augmente ainsi le nombre de crevettes qui peuvent être montées sur une pique.

### BREVE DESCRIPTION DES DESSINS

D'autres caractéristiques et avantages de l'invention apparaîtront à la lecture de la description qui suit d'un mode de réalisation particulier non limitatif de l'invention en référence aux figures ci-jointes parmi lesquelles :
- la figure 1 est une vue de côté d'une brochette comportant une seule crevette montée selon l'invention,
- la figure 2 est une vue de côté d'une brochette comportant deux crevettes montées tête-bêche,
- la figure 3 est une vue de côté de la brochette de la figure 2 après sectionnement des portions centrales décortiquées.

### DESCRIPTION DETAILLEE DE L'INVENTION

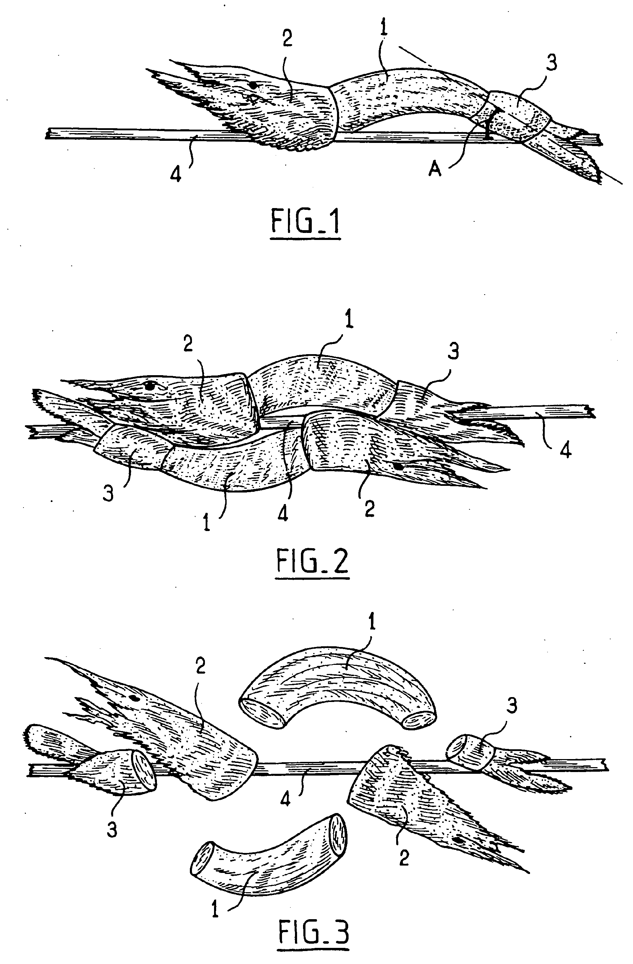

En référence à la figure 1, la brochette de crevettes selon l'invention est réalisée à partir de crevettes comprenant chacune de façon connue en soi une portion centrale décortiquée 1 délimitée par une portion de tête non décortiquée 2 et une portion de queue non décortiquée 3.

Selon l'invention, la crevette est montée sur une pique 4 en passant la pique 4 à travers la portion de tête 2 au voisinage du bord inférieur de celle-ci de façon qu'après avoir traversé la portion de tête, la pique 4 ressorte de la portion de tête sans traverser la portion centrale décortiquée de sorte que cette portion centrale s'étend sur le côté de la pique 4. La pique 4 est ensuite passée à travers la portion de queue 3 de préférence en maintenant la portion de queue 3 selon un angle A par rapport à la pique 4 de façon à provoquer une cambrure de la portion centrale décortiquée 1.

On remarque que pour consommer la partie centrale décortiquée 1 après la cuisson de la crevette, il suffit de sectionner la crevette à la limite de la portion de tête 2 et de la portion de queue 3.

La figure 2 illustre un mode de réalisation préféré de l'invention qui permet tout à la fois d'augmenter le nombre de crevettes montées sur une pique et de disposer selon une présentation esthétique permettant de présenter les brochettes directement sur une assiette. Dans ce mode de réalisation, les crevettes sont montées par paires en étant disposées tête-bêche. A cet effet, la pique 4 est tout d'abord passée à travers la portion de queue 3 d'une première crevette puis à travers la portion de tête 2 d'une seconde crevette, à travers la portion de tête 2 de la première crevette et enfin à travers la portion de queue 3 de la seconde crevette. Les portions centrales 1 des crevettes s'étendent alors de part et d'autre de la pique 4.

Comme illustré par la figure 3, lors de la consommation de la portion centrale 1 des crevettes, les portions non décortiquées restent attachées à la pique 4. Si la pique 4 est une pique jetable, il suffit donc de jeter l'ensemble dans une poubelle. Si au contraire la pique 4 est récupérable, on remarque que chaque portion non décortiquée est traversée sur une faible longueur par la pique 4 de sorte que des déchets peuvent être facilement extraits de la pique 4.

Bien entendu, l'invention n'est pas limitée au mode de réalisation décrit et on peut y apporter des variantes de réalisation sans sortir du cadre de l'invention tel que défini par les revendications.

En particulier, bien que les crevettes aient été illustrées sur les figures avec une cambrure juste suffisante pour monter les crevettes tête-bêche, on peut augmenter l'angle A de la portion de queue 3 avec la pique 4 de sorte que la portion centrale 1 est alors plus fortement cambrée et chaque crevette occupe une place encore réduite sur la longueur de la pique 4.

Bien que selon le mode de réalisation préféré les crevettes soient regroupées par paires montées tête-bêche, les crevettes peuvent être montées selon d'autres dispositions, par exemple en les regroupant par trois, deux crevettes étant disposées queue contre queue sur un côté de la pique, tandis que la troisième crevette est montée à cheval sur les portions de queue adjacentes avec la portion centrale s'étendant sur un côté opposé de la pique. On a également monté une seule crevette par brochette.

## Revendications

1. Brochette de crevettes comportant une pique (4) sur laquelle est montée au moins une crevette comprenant chacune une portion centrale décortiquée (1) délimitée par une portion de tête non décortiquée (2) et une portion de queue non décortiquée (3), **caractérisée en ce que** la pique (4) est montée à travers la partie de tête (2) et la partie de queue (3) de chaque crevette de façon que la portion centrale (1) s'étende sur un côté de la pique (4) sans être traversée par celle-ci.

2. Brochette de crevettes selon la revendication 1, **caractérisée en ce que** la portion de queue (3) forme un angle (A) avec la pique (4).

3. Brochette de crevettes selon la revendication 1 ou la revendication 2, **caractérisée en ce qu'**elle comporte plusieurs crevettes montées par paires en étant disposées tête-bêche.

## Claims

1. Skewered shrimp comprising a stick (4) having at least one shrimp mounted thereon, each shrimp having a shelled central portion (1) defined between a non-shelled head portion (2) and a non-shelled tail portion (3), the skewered shrimp being **characterized in that** the stick (4) is mounted through the head portion (2) and the tail portion (3) of each shrimp in such a manner that the central portion (1) extends to one side of the stick (4) without being pierced by the stick.

2. Skewered shrimp according to claim 1, **characterized in that** the tail portion (3) forms an angle (A) with the stick (4).

3. Skewered shrimp according to claim 1 or claim 2, **characterized in that** it comprises a plurality of shrimps mounted in pairs and disposed head-to-tail.

## Patentansprüche

1. Garnelenspießchen, umfassend einen Spieß (4), auf den mindestens eine Garnele aufgezogen ist, die jeweils einen Mittelabschnitt (1) mit entfernter Schale hat, der von einem Kopfabschnitt (2) mit nicht entfernter Schale und einem Schwanzabschnitt (3) mit nicht entfernter Schale begrenzt ist, **dadurch gekennzeichnet, dass** der Spieß (4) derart durch den Kopfabschnitt (2) und den Schwanzabschnitt (3) jeder Garnele gesteckt wird, dass sich der Mittelabschnitt (1) auf einer Seite des Spieß (4) erstreckt, ohne von demselben durchsetzt zu werden.

2. Garnelenspießchen nach Anspruch 1, **dadurch gekennzeichnet, dass** der Schwanzabschnitt (3) einen Winkel (A) mit dem Spieß (4) bildet.

3. Garnelenspießchen nach Anspruch 1 oder Anspruch 2, **dadurch gekennzeichnet, dass** er mehrere Garnelen umfasst, die paarweise aufgezogen werden, indem sie Kopf an Fuß angeordnet werden.
